(19) **Europäisches Patentamt**
**European Patent Office**
**Office européen des brevets**

(11) **EP 1 240 717 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.⁷: **H04B 1/20**, H04L 29/12

(21) Anmeldenummer: **00987353.0**

(22) Anmeldetag: **06.12.2000**

(86) Internationale Anmeldenummer:
**PCT/EP2000/012257**

(87) Internationale Veröffentlichungsnummer:
**WO 2001/047129 (28.06.2001 Gazette 2001/26)**

(54) **VERFAHREN UND SYSTEM ZUR STEUERUNG UND ZUM AUSTAUSCH VON DATEN FÜR MULTIMEDIALE GERÄTE SOWIE DAFÜR GEEIGNETES GERÄT**

METHOD AND SYSTEM FOR CONTROLLING AND EXCHANGING DATA FOR MULTIMEDIAL APPLIANCES AND AN APPLIANCE SUITABLE THEREFOR

PROCEDE ET SYSTEME DE COMMANDE ET D'ECHANGE DE DONNEES POUR APPAREILS MULTIMEDIA, ET APPAREIL ADAPTE A CE PROCEDE

(84) Benannte Vertragsstaaten:
**AT BE CH CY DE DK ES FI FR GB GR IE IT LI LU MC NL PT SE TR**

(30) Priorität: **21.12.1999 DE 19961644**

(43) Veröffentlichungstag der Anmeldung:
**18.09.2002 Patentblatt 2002/38**

(73) Patentinhaber: **Grundig Multimedia B.V.**
**1083HJ Amsterdam (NL)**

(72) Erfinder:
• **HERFET, Thorsten**
**90518 Altdorf (DE)**
• **BUSCH, Hans-Jürgen**
**91186 Büchenbach (DE)**

(74) Vertreter: **Pröll, Jürgen**
**GRUNDIG Aktiengesellschaft,**
**R-L 1, Patentabteilung,**
**Beuthener Strasse 41**
**90471 Nürnberg (DE)**

(56) Entgegenhaltungen:
**EP-A- 0 482 951      US-A- 4 689 786**
**US-A- 5 745 699**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und ein System zur Steuerung und/oder zum Austausch von Daten für multimediale Geräte sowie ein dafür geeignetes Gerät.

Verfahren und Systeme zur Steuerung und/oder zum Austausch von Daten für multimediale Geräte, wie z. B. Geräte der Unterhaltungselektronik, sind in der Vergangenheit bekannt geworden, dabei wird eine Verbindung zwischen den einzelnen Geräten verwendet, z. B. ein Bus.

Beim Sat-Link-System wird eine Verbindung zwischen einem Satelliten-Empfänger und einem Videorecorder benutzt. Der Viderecorder steuert hierbei im Timermodus, d. h. wenn die Aufzeichnung einer Sendung eines bestimmten Sendekanals programmiert ist, die Abstimmschaltung des Satelliten-Empfängers, um den entsprechenden Sendekanal am Satelliten-Empfänger auszuwählen. Dabei ist es nicht möglich Rückmeldungen zu übertragen, vielmehr werden ausschließlich unidirektional Steuerbefehle vom Videorecorder zum Satelliten-Empfänger übertragen. Erst neuere Satelliten-Empfänger-Module für TV-Geräte ermöglichen in Verbindung mit einem entsprechenden Videorecorder, über Pin 8 der SCART-Buchse, eine Rückmeldung. Hier wird bidirektionale Kommunikation über die Verschaltung zweier unidirektionaler Verbindungen simuliert. Über Pin 8 der SCART-Buchse werden die vom TV-Gerät empfangenen Steuerbefehle an angeschlossene Videorecorder und/oder Satelliten-Empfänger weitergeleitet. Hierdurch können die angeschlossenen Geräte trotz Abschattung des IR-Empfängers - z. B. bei Einbau in ein geschlossenes Rack - betrieben werden.

Unter der Bezeichnung Megalogic ist ein Bus-Konzept für Geräte der Unterhaltungelektronik bekannt geworden, welche die Anmelderin herstellt und vertreibt. Bei diesem System ist die Kommunikation und die Anschaltung von Geräten wie insbesondere TV-Gerät, Videorecorder und Satelliten-Empfänger möglich. Die Datenrate beträgt etwa 200 bps, das Datensignal wird auf Pin 10 der SCART-Buchse übertragen. Die einzelnen Verbindungen werden über Open Collector-Stufen angeschaltet. Die Netzwerktopologie besteht normalerweise aus der Verkettung von Peer-to-Peer-Verbindungen, kann jedoch elektrisch auch durch SCART-Verteiler realisiert werden. Prinzipiell gibt es 16 feste Geräte-Adressen (0-15).

Andere Busse zur Steuerung und zum Datenaustausch basieren beispielsweise auf dem Standard IEEE1394 und ermöglichen sogenanntes "Hot Plug & Play", d. h. Geräte können neu in den Bus eingebunden werden und sofort in Betrieb genommen werden, ohne daß eine Initialisierung des neuen Geräts nötig wird. Auch das beliebige Ein- und Ausschalten der Geräte wird ermöglicht und im System erkannt, da die einzelnen Geräte entsprechende Hardware-Voraussetzungen aufweisen. Bei diesen Systemen ist eine herstellerübergreifende Festlegung geplant, wobei es mittels digitaler Kommunikation möglich ist, verschiedener Geräte (DVB-STB, Internet-STB, DVD, IDVD, DVCR, Game-Konsole, TV u. v. m.) zu verbinden. Dabei ist die gleichzeitige Übertragung von Steuer- und AV-Daten möglich.

Aus EP-A-0482951 ist ein an und für sich bekannter Master-Slave-Bus bekannt

Die bekannten Verfahren und Systeme zur Steuerung und zum Austausch von Daten für multimediale Geräte weisen allerdings den Nachteil auf, daß sie einerseits sehr einfach sind - sowohl hinsichtlich des nötigen Aufwands als auch der zur Verfügung stehenden Möglichkeiten (Sat-Link-System, Mecalogic), wobei insbesondere das Erkennen von Ein- und Ausschaltvorgängen einzelner Geräte innerhalb des Systems Probleme bereitet, und daß sie andererseits großen Hardware-Aufwand erfordem (Systeme nach IEEE1394).

Es ist daher Aufgabe der vorliegenden Erfindung ein Verfahren und ein System zur Steuerung und/oder zum Austausch von Daten für multimediale Geräte sowie ein dafür geeignetes Gerät anzugeben, das bei geringem zusätzlichem Aufwand eine nahezu beliebige Konfiguration des Systems erlaubt, wobei die einzelnen Geräte des Systems beliebig betrieben werden können und dabei jederzeit im System erkannt werden.

Bei der vorliegenden Erfindung wird diese Aufgabe durch die Merkmale der Ansprüche 1, 10 und 18 gelöst.

Bei der Erfindung wird dabei von der Überlegung ausgegangen, daß jedes der in das System eingebundenen Geräte in regelmäßigen Zeitabständen eine Nachricht über den Bus sendet, sobald es aktiviert worden ist. Aus dieser Nachricht ist einerseits das Gerät nach Art und Typ zu erkennen, andererseits ist aus der Nachricht ersichtlich, daß das Gerät eingeschaltet, d. h. aktiv, ist. Alle anderen aktiven Geräte im System werten diese Nachrichten aus, und senden selbst derartige Nachrichten, solange sie aktiv sind. Da auf diese Weise jedes aktive Gerät über Informationen über die anderen aktiven Geräte im System verfügt, können die aktiven Geräte bei Bedarf andere aktive Geräte steuern oder Daten mit ihnen austauschen.

Der Vorteil der erfindungsgemäßen Einrichtung ist darin zu sehen, daß nahezu ohne zusätzlichen schaltungstechnischen Aufwand Geräte miteinander verbunden werden können, um sich gegenseitig zu steuern oder um Daten miteinander auszutauschen. Geräte die zu gewissen Zeitpunkten nicht betrieben werden sollen, können zudem vollständig von der Energieversorgung, z. B. der Netzspannung getrennt werden, da sie sich nach emeutem Aktiveren automatisch über den aktuellen Zustand der anderen Geräte informieren.

Weitere Vorteile der vorliegenden Erfindung ergeben sich aus den abhängigen Ansprüchen sowie der nachfolgenden Beschreibung von Ausführungsformen erfindungsgemäßer Einrichtungen zur digitalen Übertragung von Audiosignalen anhand von Figuren.

Es zeigt:

Fig. 1 ein prinzipielle Darstellung eines Schichtenmodells für ein System zur Steuerung und zum Austauschen von Daten für multimediale Geräte,

Fig. 2 ein Prinzipschaltbild eines Systems zur Steuerung und zum Austausch von Daten für multimediale Geräte,

Fig. 3 bis 5 Ausführungsbeispiels von Anschaltungen für in multimedialen Geräten verwendete Prozessoren an einen Bus,

Fig. 6 ein Ausführungsbeispiel für den Aufbau eines elementaren Datenpakets,

Fig. 7 und 8 Ausführungsheispiele für den Aufbau verschiedener Datenpakete,

Fig. 9 die Auswirkung von Zeitfehlem auf Datenpakete,

Fig. 10 bis 17 Ausführungsbeispiele für den Aufbau verschiedener Datenpakte,

Fig. 18 ein Ausführungsbeispiel für die Gestaltung eines Konfigurationsspeichers, und

Fig. 19 ein Ausführungsbeispiels für die Gestaltung eines Speicherwortes für den Konfigurationsspeicher nach Fig. 18.

Zur Erleichterung des Verständnisses der vorliegenden Erfindung sind in den Figuren nur die Bestandteile der Ausführungsformen dargestellt, die im Zusammenhang mit der Erfindung von Bedeutung sind. Gleiche Bestandteile in den Figuren weisen gleiche Bezugszeichen auf.

Allgemein können an ein Verfahren und ein System zur Steuerung und zum Austausch von Daten für multimediale Geräte z. B. folgende Anforderungen gestellt werden:

| | |
|---|---|
| Datenrate | Bis ca. 100 kbps |
| Datenart | Kontroll- und Systemdaten |
| Topologie | Bus |
| Transportmedium | Kabel |
| Paket-Synch | Flankengetriggert |
| Mediumsabschluß | keiner |
| Organisation | Peer to Peer |
| Verbindungsart | Point to Point, Broadcasr |
| Arbitrierung | CSMA/CD |
| Adressierung | GUID, NodeID |
| Fehlerschutz | ARQ/CRC |
| Managment | Register Based |
| An- /Abmeldung | Hot Plug & Play |

Aus den vorstehend genannten Anforderungen ergibt sich, daß die einzelnen Geräte über ein Kabel, welches von Gerät zu Gerät verläuft, verbunden werden. Die Geräte haben dabei zwingend zwei Buchsen. Ausgenommen hiervon sind Geräte, die eindeutig End-Geräte darstellen (z. B. Camcorder).

Geräte können zu jedem Zeitpunkt an den Bus angeschlossen und von diesem getrennt werden (Hot Plug & Play). Informationen über die Geräte und deren Eigenschaften werden in einer fest vereinbarten Struktur unter einer vereinbarten Basisaddresse abgelegt.

Nachfolgend soll der Aufbau des Systems anhand des ISO/OSI-Schichtenmodells erläutert. Hierdurch wird verdeutlicht, an welchen Stellen auf gewisse Eigenschaften verzichtet wurde, um eine Realisierung mit geringem Aufwand zu ermöglichen.

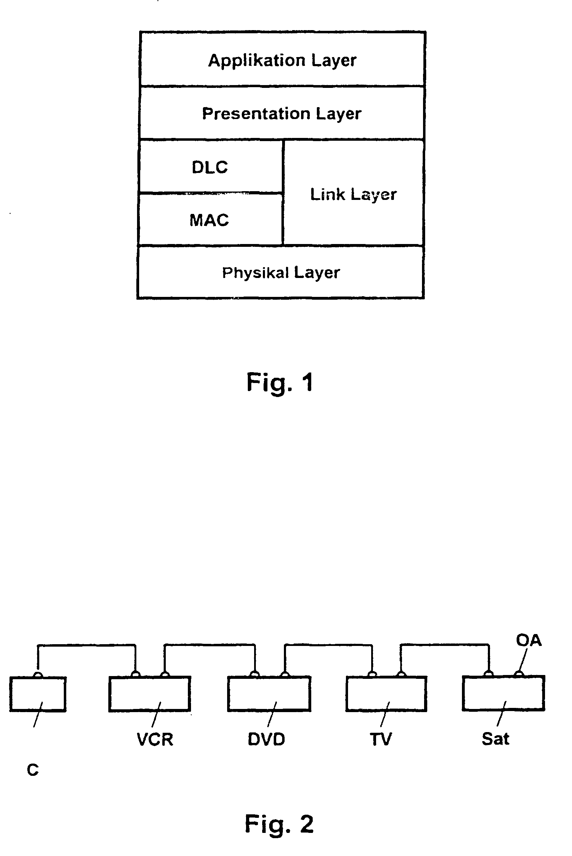

In Figur 1 sind die Schichten des vorliegenden Systems dargestellt. Ein Physical Layer stellt die Übertragung einzelner Daten-Pakete zur Verfügung. Da aufgrund der zu minimierenden Belastung von in den einzelnen Geräten verwendeten Prozessoren oder Mikrocontroller nur Einzelpaket-Transaktionen zugelassen sind, stellt der Physical Layer Dienste für die Übertragung von Paketen mit variierender Länge zur Verfügung.

Ein Link Layer stellt Mechanismen für den Zugriff auf Medium (Medium Access Layer: MAC Layer), Fehlerschutz sowie einzelne Paketarten zur Verfügung. Zusätzlich sorgt der Link Layer (Device Link Control Layer, DLC) für die Adreßbehandlung: Jedes Gerät beinhaltet eine GUID (64 bit MAC-Adresse), die jedoch nicht zur Übertragung verwendet wird, da dies zu unnötig hoher Belastung der Prozessoren führt. Aus diesem Grund wird eine NodeID (6 bit lang) vergeben. Die Vergabe dieser NodeID ist ebenfalls Aufgabe des Device Link Control Layers (DLC).

Zur Vereinfachung des Systems wird sowohl auf einen Network Layer als auch auf einen Transport Layer verzichtet, wie sie nach dem ISO/OSI-Schichtenmodell vorgesehen sind. Diese können entfallen, da es ist nicht beabsichtigt ist, verschiedene Busse mit unterschiedlichem Datenverkehr zu einem Netzwerk zusammenzufassen. Routing-Mechanismen sind deshalb nicht notwendig.

Ebenfalls kann auf einen Session Layer verzichtet werden, welcher der weiteren Unterteilung einer Kommunikation dient, um erstens im Fehlerfall nicht die komplette Kommunikation wiederholen zu müssen, und zweitens zur Erhöhung der Sicherheit (Verschlüsselung einzelner Sessions). Da die vorgesehenen Datenblöcke klein sind, wird auf den Session Layer verzichtet. Im Presentation Layer wird der Inhalt der einzelnen Datenpakete definiert. Für das vorliegende System sind dies vornehmlich die Inhalte der vordefinierten Register (CSR) sowie direkte Steuerkommandos (RC-Codes).

Im Application Layer werden die einzelnen Geräte definiert, da die einzelnen Geräte im Zusammenhang mit dem Verständnis der vorliegenden Erfindung nicht von Bedeutung sind, wird auf die Beschreibung des Application Layer verzichtet.

Für die Realisierung des Physical Layers sind, zur Vermeidung von Aufwand, zwei Kriterien mit höchster Priorität zubeachten, nämlich möglichst geringe Hardware Zusatzksten, z. B. durch einfache Busankoppler, und Verwendung von ohnehin in den zu verbindenden Geräten vorhandenen Bauteilen, z. B. UART (Universal Asynchrounus Receiver Transmitter). In den nachfolgenden Abschnitten werden einzelne Teilbereiche des Physical Layer beschrieben.

Eine mögliche Bus-Topologie ist in Figur 2 dargestellt. Die Bit-Übertragung findet mit einem Standard-UTP-Kabel der Kategorie 3 (ein verdrilltes Adernpaar) mit Wellenwiderstand 100 Ω statt. Als Buchsen werden aus Kostengründen Standard-Chinch-Buchsen verwendet. Zur Vermeidung von Verwechslungen mit Sat-Link-, Audio- oder S-VHS-Buchsen können auch andere Buchsen (z. B. Klinke) verwendet werden. Die Chinch-Buchse stellt jedoch die kostengünstigste Variante dar.

Der Bus wird ohne Abschluß OA betrieben. Die Verbindung des Bus erfolgt mittels durchschleifen durch Geräte mit zwei Buchsen, wie z. B. Videorecorder VCR, DVD-Geräte DVD, TV-Geräte TV und Satelliten-Empfänger Sat. Ausnahme bilden nur dedizierte Endgeräte, wie z. B. Camcorder C, die mit nur einer Buchse ausgestattet werden. Hierdurch können Stichleitungen vermieden werden.

Wie oben bereits erwähnt, ist eine kostengünstige Realisierung innerhalb einzelner Endgeräte nur möglich, falls vorhandene Ressourcen genutzt werden können. Ein zu verwendendes Protokoll wird daher so ausgelegt, daß ein vorhandener UART genutzt werden kann, um die Software-Belastung des Prozessors in den Geräten zu reduzieren.

Durch eine vorgegebene Basisgeschwindigkeit des Protokolls, z. B. 115.200 bps, bzw. der sich daraus ergebenden Taktfrequenz des Busses, und eine vorgegebene maximale Paketlänge, z. B. 69 Byte, wird erreicht, daß auch reine Software-Auswertung möglich ist, da der Prozessor dafür nur kurze Zeit (6 ms) für den Paketempfang benötigt wird, weil der Paketempfang in Echtzeitbetrieb erfolgen muß. Geräte bzw. deren Prozessoren, für die diese Zeit zu lang ist, können über ein SPLIT_TIME-OUT-Register, das später beschrieben wird, die für sie maximal zulässige Paketlänge signalisieren. Die anschließende Abarbeitung der Decodierung kann innerhalb des normalen Task-Switchings des Prozessors erfolgen.

Probleme bei der Nutzung vorhandener UARTs können sich unter Umständen erbeben, falls die gewählte Taktfrequenz des Busses teilerfremd zur den Prozessortakten in den Geräten sein sollte. Dadurch wird es unmöglich, Frequenzteiler so einzustellen, daß die Taktfrequenz des Busses (115.200 bps) mit der erforderlichen Genauigkeit erreicht wird. Zur Nutzung des UART ist dann eine Anpassung des Prozessortaktes notwendig, deren Auswirkungen auf andere Prozesse genau verifiziert werden müssen.

Für die Realisierung einer Schnittstelle zwischen Gerät und Bus sind mehrere Lösungen möglich.

In einer ersten Lösung ist es vorgesehen, die Schnittstelle als vollständige Softwarelösung zu realisieren. Der Zugriff auf den Bus belegt einen Eingangsport und einen Ausgangsport des Prozessors im Gerät. Diese Lösung bietet sich vor allem für Prozessoren an, die über keine interne UART verfügen. Zur Erkennung von Startbits ist z. B ein flankenaktivierter Interrupteingang nötig. Nach einem erfolgten Startbit-Interrupt muß der Prozessor in einer Einleseroutine verharren, bis der gesamte Datenrahmen (=Paket) eingelesen ist. Um den Prozessor nicht unnötig zu belasten, wird die Möglichkeit vorgesehen, den verwendeten Interrupteingang mit einer externen Beschaltung für den Rest des Datenrahmens zu sperren. Eine derartige Beschaltung wird später erläutert.

Eine zweite Möglichkeit ist für Prozessoren bzw. Mikrocontroller geeignet, die ein internes serielles Interface (UART-Interface) zur Verfügung stellen. Dabei wird ein Ausgang (TRX) über einen Open Collector an den Bus angeschlossen und ein Eingang (RXD) entsprechend benutzt. Eine Sperrung des Interface Interrupts kann ebenfalls über externe Beschaltung erreicht werden. Die Software-Belastung des Prozessors ist gegenüber einer Lösung ohne serielles Interface deutlich geringer.

Einschränkungen gibt es bezüglich der einstellbaren Baudraten für die integrierten UART Module, wie bereits oben angedeutet. Der Baudratentakt wird durch interne, einstellbare Hardwareteiler vom CPU-Quarz abgeleitet. Somit ergibt sich eine vom eingesetzten Mikrocontroller abhängige Rasterung der möglichen Baudratenwerte. Liegt diese sich ergebende Abweichung außerhalb der festgelegten Toleranzen der Busdatenrate (im Beispiel 115.200 bps), kann diese nur noch durch eine Variation des Quarztaktes angepaßt werden. Ist diese Quarztaktänderung aus anderen Gründen nicht möglich, so kann/muß das serielle Interface über eine Softwarelösung realisiert werden.

Bei leistungsschwachen Prozessoren bzw. Mikrocontrollern stellt es eine weitere, sich anbietende Möglichkeit dar, einen externen UART-Baustein zu benutzen, um den Prozessor zu entlasten. Allerdings stellt ein derartiger externer Baustein einen nicht zu unterschätzenden Kostenaufwand dar, wodurch der Wechsel auf einen schnelleren/ leistungsfähigeren Mikrocontroller günstiger sein kann.

Zur Realisierung des Busses ist es vorgesehen, wie bereits oben angedeutet, die Busverbindung über eine verdrillte Busleitung (UTP) ohne Abschluß durchzuführen. Stichleitungen sollen vermieden werden. Die Geräte stellen zwei parallelgeschaltete Buchsen zur Weiterleitung zur Verfügung. Ausnahme bilden nur Endgeräte, wie z. B. Camcorder. Die Anschaltung erfolgt über eine Open-Collector-Stufe. Hierdurch ist 0 V der dominante Pegel (es genügt ein Gerät um den Pegel auf dem Bus zu erzwingen) und wird als Logisch null definiert. Die Open-Collector-Stufen werden hochohmig (100 k$\Omega$) ausgelegt, um den auf dem Bus fließenden Strom auch bei maximaler Busbelegung zu begrenzen.

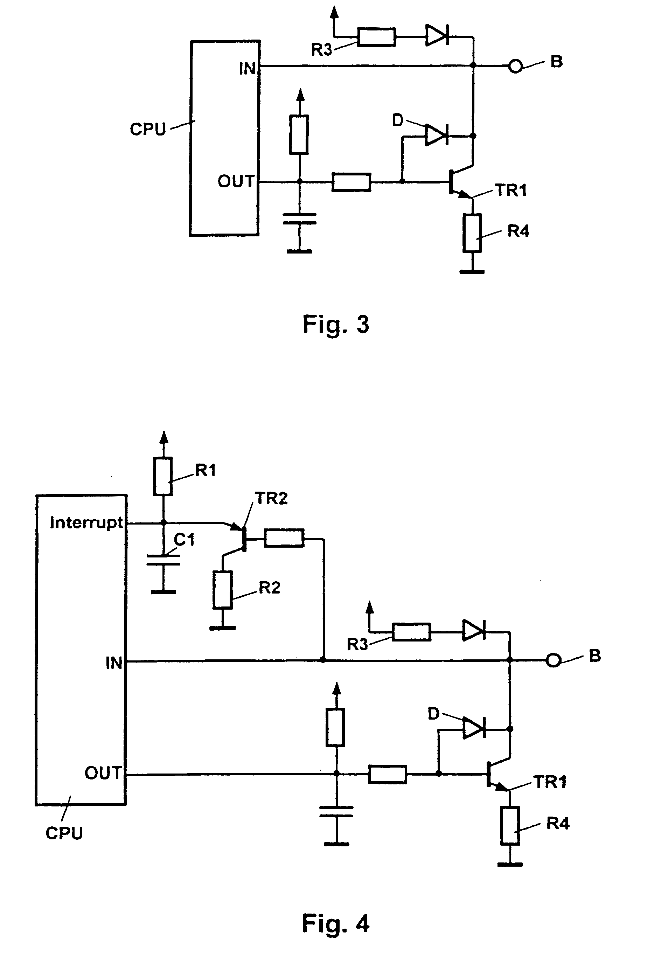

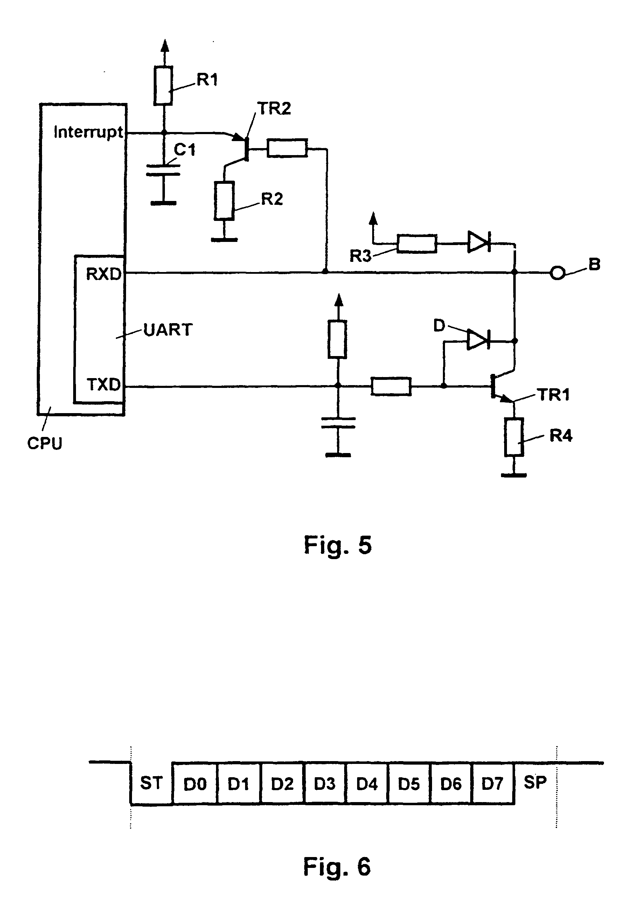

In den Figuren 3 und 4 sind Ausführungsbeispiele von Open-Collector-Stufen für eine Anschaltung der in den Geräten verwendeten Prozessoren CPU dargestellt. Figur 3 zeigt ein Ausführungsbeispiel ohne Interruptsperrung, Figur 4 ein Ausführungsbeispiel mit Interruptsperrung. In Figur 5 ist ein Ausführungsbeispiel einer Open-Collector-Stufe für die Anschaltung eines Mikrocontrollers CPU mit einem UART dargestellt, bei dem eine Interruptsperrung vorgesehen ist.

Die Zeit, in der der Interrupt gesperrt wird ergibt sich aus einer Zeitkontante $T_1 = R_1 \cdot C_1$. Die Entladezeit für $C_1$ über den Entladetransistor TR2 muß dabei kleiner sein als die Übertragungszeit für ein bit. Letztere wird im nachfolgenden als $T_e = R_2 . C_1$ bezeichnet.

Durch die Diode D zwischen Basis und Kollektor wird beim Einschalten des Transistors TR1 der Basisstrom begrenzt. Dieser wird durch die geringe Durchlaßspannung zum Kollektor abgeführt. Beim Ausschalten braucht der Transistor TR1 viel weniger Zeit. Eine geeignete Diode D ist z. B. Typ BAT 85, eine spezielle Schaltdiode.

Der Anschluß an den Bus erfolgt über eine Buchse B. Zum Durchschleifen des Busses kann eine zweite Buchse parallel zur dargestellten Buchse B angeschlossen werden. Die Widerstände der Open-Collector-Stufen weisen beispielsweise Widerstandswerte von R3 = 100 k$\Omega$ und R4 = 220 $\Omega$ auf.

Zur Realisierung sowohl einer UART-Unterstützung als auch einer reinen Software-Lösung werden die Pakete derart gestaltet, daß am Paketbeginn sowohl ein UART reagieren kann als auch ein Interrupt auslösbar ist. Ein derartiges Paket ist in Figur 6 dargestellt. Die fallende Flanke eines Startbits ST löst den Einlesevorgang des Pakets aus. Gleichzeitig wird das RC-Zeitglied ($R_1$, $C_1$) für die Interruptsperrung durch das null bit entladen und sperrt somit die nachfolgenden Flanken, bis der Schwellwert nach einer Paketübertragung wieder erreicht ist. Die Abtastung der einzelnen Datenbits übernimmt nun eine Softwareroutine bei Prozessoren ohne UART, oder das eingebaute UART-Modul des Mikrocontrollers. Der gesamte Byte-Rahmen besteht z. B. aus zehn bit, dem Startbit ST, acht Datenbits D0 bis D7 und einem Stoppbit. Beispielsweise wird Datenbit D0 als niedrigstwertigstes bit festgelegt, um die angestrebte Kompatibilität zum UART zu erreichen. Bei Übertragung mehrerer Bytes wird dennoch das höchstwertigste Byte zuerst übertragen.

Wie bereits oben angegeben, ergeben bis zu 69 physikalische Byte-Rahmen einen Rahmen des Physical Layer. Die Byte-Rahmen werden direkt nacheinander übertragen. Lücken entstehen nur zwischen den Rahmen (Arbitration Gap) und zwischen Rahmen und Acknowledge (Acknowledge Gap).

Jeder empfangene Rahmen wird vom adressierten Gerät (Node) mit einem Acknowledge-Signal quittiert. Der Abstand zum vorausgegangenen Rahmen soll beispielsweise $3 \pm 1$ bit betragen. Danach muß eine Lücke von mindestens 20 bit $\cong$ 175 $\mu$s eingehalten werden, bis eine neue Nachricht von einem beliebigen Gerät im Netzwerk gesendet werden darf. In dieser Zeit muß sich das Zeitglied $C_1$ (Figuren 4 und 5) auf die Betriebsspannung aufgeladen haben, damit eine Interruptfreigabe erfolgt.

Der Link Layer bewerkstelligt die Geräteadressierung, den Fehlerschutz sowie für die Busarbitrierung. Fair Arbitration, d. h. gleiche Arbitrierungswahrscheinlichkeit und -zeit für alle Geräte, wird über eine einfache, zufällige Zeitkonstante nach Ablauf des Arbitration Gap erreicht. In Verbindung mit CRC (Fehlerschutz) und Acknowledge wird so eine sichere Paketübertragung bei akzeptablem Durchsatz erreicht.

Für den Bus sind drei unterschiedliche Pakete vorgesehen. Ein ALIVE-Paket ermöglicht die Realisierung von Hot Plug & Play ohne zusätzliche Hardware-Maßnahmen. Ein DATA-Paket ermöglicht die gekennzeichnete Übertragung von Daten. Ein Spezialfall ist die Übertragung von Fembedienkommandos. Ein CSR-Paket schließlich ermöglicht den Austausch von Geräteinformationen, z. B. Fähigkeiten der Geräte oder innere Zustände der Geräte. Das CSR-Paket stellt auch Register für Transaktionen (READ, WRITE, LOCK) zur Verfügung.

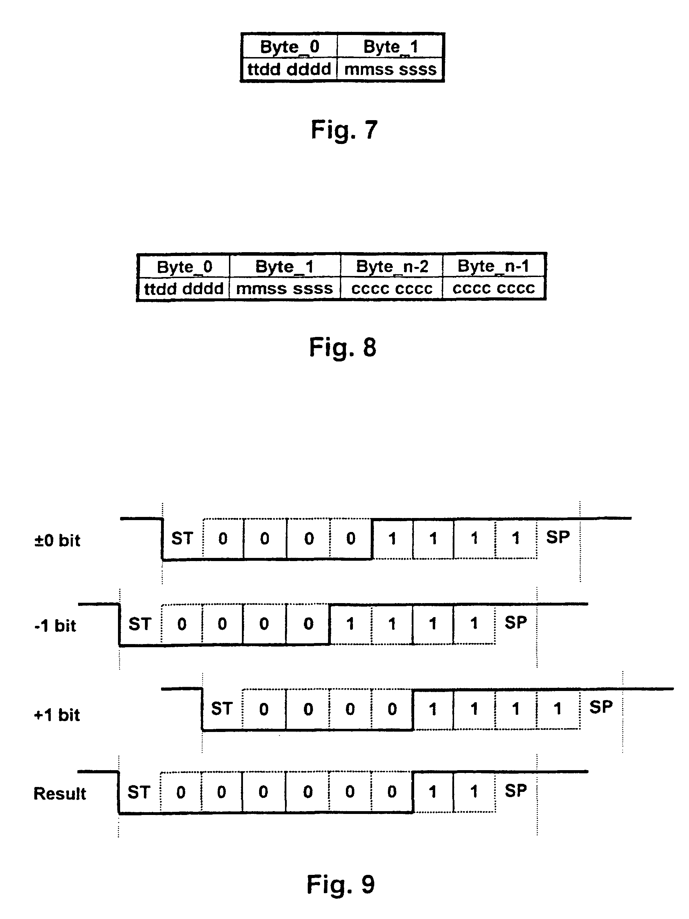

In Figur 7 ist der Aufbau eines allgemeinen Headers dargestellt. Der allgemeine Header besteht aus zwei Bytes, Byte_0 und Byte_1.

Das erste Byte Byte_0 bestimmt sowohl den Paket-Typ tt, als auch eine Zieladresse dddddd. Dies erleichtert das schnellen Filtern der Pakete und führt zu einer Entlastung der Prozessoren in den Geräten. ALIVE-Pakete werden beispielsweise als Typ 01 gekennzeichnet, d. h. die ersten beiden bit des Byte_0 weisen eine Codierung von logisch null und eins auf. Werden beispielsweise zur Ermittlung der Netzwerktopologie alle angeschlossenen Geräte ermittelt können alle ALIVE-Pakete sehr schnell ausgewertet werden, wohingegen andere Pakete verworfen werden. Die Zieladresse wird mittels der sechs dddddd bit codiert. Wird zur Codierung die untere Hälfte der Adressen zugelassen, d. h. die unteren fünf bit, ist maximal eine Anzahl von 32 Geräten plus der 3Fh (Hexadezimalangabe) als Broadcastadresse, die bei ALIVE-Paketen vorgeschrieben ist, adressierbar. Die obere Hälfte der Adressen kann z. B. für zukünftige Nutzungen und Dienste wie Point-to-Multipoint vorgesehen werden.

Das zweite Byte Byte_1 enthält einen Modifier mm, der entweder den Dienst oder den Transaktions-Typ kennzeichnet und eine Quell-Adresse ssssss, d. h. die Adresse des sendenden Geräts. Als Dienste sind ALIVE, Data und RC-Code (Fernbedienungsbefehle) vordefiniert. Ein weiterer Typ steht für zukünftige Nutzung zur Verfügung. Zusätzlich steht ein generischer Typ zur Verfügung, der auf z. B. das nächste Byte zur Beschreibung weiterer Dienste verweisen kann. Als Transaktionen stehen READ, WRITE und LOCK zur Verfügung, diese werden unten beschrieben.

Nachfolgend wird eine mögliche Codierung für den allgemeinen Headers angegeben:

Byte_0

2 bit Typ: tt

00 = DATA

01 = ALIVE

10 = CSR-Request

11 = CSR-Response

6 bit Ziel-Adresse: dddddd

00h-1Fh = Zieladresse des Gerätes (NodeID)

3Fh = Broadcast, vorgeschrieben bei ALIVE-Paketen

Byte_1

2 bit Modifier: mm

Im Fall Typ = ALIVE

00 = valid

01 = invalidate

10 = reserved for fature use

11 = reserved for future use

Im Fall Typ = DATA

00 = ALIVE-Paket oder RAW DAT

01 = RC-Code

10 = reserved for future use

11 = GENERIC DATA

Im Fall Typ = CSR Request / CSR Response

00 = READ

01 = WRITE

10 = LOCK (test and modify)

11 = GENERIC TRANSACTION

6 bit Quell-Adresse: ssssss

Für den Fehlerschutz wird beispielsweise ein 16 bit CRC-Code eingesetzt. Der Code wird über das gesamte Paket angesetzt, jedoch ohne Start- und Stopbits. Als CRC-Code wird beispielsweise der von der ITU-T (z. B. für HDLC) definierte Code mit folgenden Daten gewählt:

$$\text{Generatorpolynom: } p(x) = x^{16} + x^{12} + x^{5} + x^{0}$$

$$\text{Codierung durch: } crc(x) = data(x) \cdot x^{16} \bmod p(X)$$

Eine Initialisierung ist nicht erforderlich, da durch den Header mit mindestens 2 Byte immer ein gültiges Datenwort gegeben ist. Der Empfänger kann nun entweder

$$data(X) \cdot x^{16} \bmod p(x) = crc(x)$$

oder

$$(\text{data}\,(x) \cdot x^{16} + \text{crc}(x))\bmod p(x) = 0$$

auf Gültigkeit überprüfen. Es ist zu beachten, daß die Arithmetik über dem GF(2) (Galois-Feld: Binärer Zahlenraum) durchgeführt wird, das heißt Addition und Subtraktion der Koeffizienten finden ohne Übertrag (EXOR) statt.

Mit dem angegebenen CRC-Code können typische Fehler in leitungsgebundenen Netzen, d. h. Einzel- und Doppelbitfehler durch Abtastoder Schwellwertfehler (Rauschen, Phasenverschiebung) sowie Burstfehler (EMV-Störungen durch z. B. Elektromotoren) erkannt werden.

Pakete des Link Layer werden durch ein Acknowledge-Paket bestätigt. Das Acknowledge-Paket folgt direkt der Nachricht, wobei die Signallücke (Acknowledge Gap) 3±1 bit betragen darf. Das Acknowledge-Paket ist so ausgelegt, daß sowohl im Falle der Punkt-zu-Punkt-Verbindung als auch im Falle der Broadcast-Nachricht ein Link Layer Acknowledge ermöglicht wird. Die genaue Definition des Acknowledge und die Auswertung im Falle der Broascast-Nachricht werden unten beschrieben.

In Figur 8 ist ein mögliches Ausführungsbeispiel für ein ALIVE-Paket dargestellt. Das ALIVE-Paket besteht aus vier Byte, Byte_0 bis Byte_n-1. Byte_0 und Byte_1 entsprechen dem oben beschriebenen allgemeinen Header. Die Zeitdauer eines ALIVE-Paketes beträgt demnach 350 µs. Somit stellt die Aussendung eines ALIVE-Pakets pro Sekunde für jedes Gerät eine gute Realisierungsmöglichkeit dar, $T_{AM}$ = 1s

Damit liegt die Busbelegung unter der Annahme von 90 bit pro ALIVE-Paket (40 bit Paket + 4 bit Acknwledge-Gap + 10 bit Acknowledge + 36 bit Arbitration-Gap) im Normalfall in der Regel unterhalb 1 %:

| Σ Geräte | Busbelegung |
|---|---|
| 2 | 0,16% |
| 4 | 0,31% |
| 8 | 0,62% |
| 16 | 1,25% |
| (32) | 2,50% |

Da die ALIVE-Pakete Broadcast-Pakete sind, d. h. die ALIVE-Pakte sind an alle an den Bus angeschlossenen Geräte gerichtet, wird ein spezielles Acknowledge vereinbart: Zur Erkennung, ob mindestens ein Gerät das ALIVE-Paket korrekt empfangen hat, wird das Acknowledge untersucht. Wegen der Dominanz der Logischen Null wird folgende Vereinbarung getroffen:

ACK_OK = 0Fh
ACK_ERR = FFh

Treffen die Acknowledges zu unterschiedlichen Zeiten ein, können Startbits als Logische null interpretiert werden. Aus Figur 9 ist jedoch ersichtlich, daß immer mindestens zwei bit verbleiben, um zu erkennen, daß mindestens ein Gerät das ALIVE-Paket korrekt decodieren konnte. Dazu sind in Figur 9 drei Acknowledges mit 0 bit, -1 bit und +1 bit Zeitfehler dargestellt. Der sich ergebende Paket Result zeigt die zwei verbleibenden bit auf.

Der Modifier mm in Byte_1 des ALIVE-Pakets wird benötigt, um im Fall der Verbindung zweier Busse die damit verbunden unter Umständen doppelt vorhandenen Node-IDs abzufangen. In diesem Fall wird angezeigt, daß die Node-ID ungültig ist und neu verhandelt werden muß. Das dazu nötige Vorgehen wird später beschrieben.

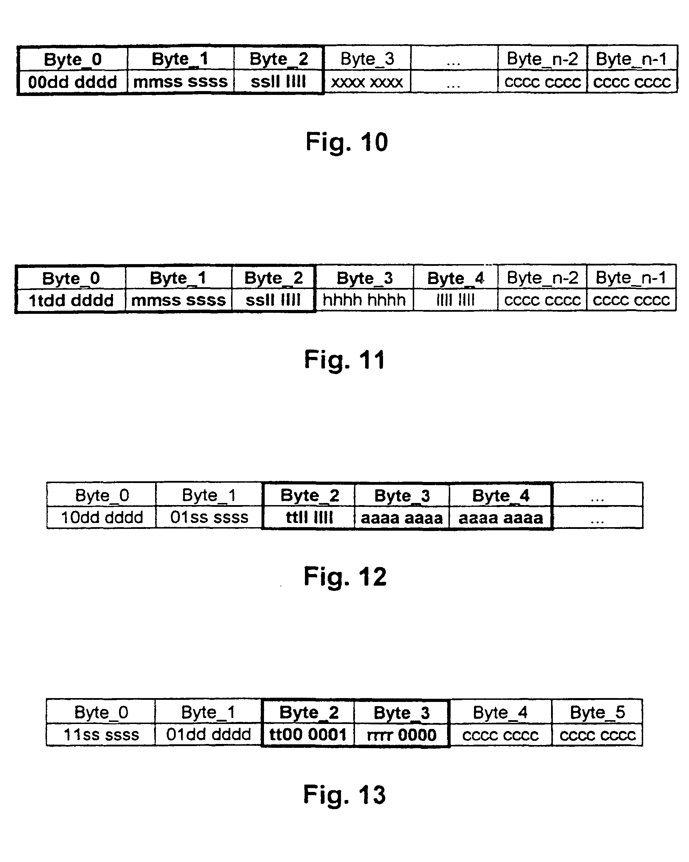

In Figur 10 ist ein mögliches Ausführungsbeispiel für ein DATA-Paket dargestellt. Die DATA-Pakete besitzen den gleichen allgemeinen Header mit der Typ-Bezeichnung DATA. Der gesamte Header ist 3 Byte lang, Byte_0 bis Byte_2. Das zusätzliche Byte Byte_2 ist wie folgt codiert:

Byte_2    ss: 2 bit Transaktions-Kennung (wird vom Sender vergeben)
          llllll: 6 bit Nutzdatenlänge (Anzahl Bytes ohne Header und CRC)

Dieses zusätzliche Header-Bytes ermöglicht die Codierung sowohl der Nutzdatenlänge llllll, zur Einstellung des Empfangsprozessors und CRC-Decoders, als auch die Codierung von Neuversuchen. Dies kann notwendig werden, wenn ein Paket korrekt empfangen, die Antwort jedoch nicht gesendet oder während der Übertragung gestört wurde. In diesem Fall kann zum Beispiel das gesteuerte Gerät ein Programm bereits umgeschaltet haben, das steuernde Gerät jedoch einen Neuversuch starten, der zum erneuten, unbeabsichtigten Programmwechsel führt. Dieser Fall kann durch die Transaktions-Kennung ss vermieden werden. Die anderen dargestellten Bytes enthalten Nutzdaten.

In Figur 11 ist ein mögliches Ausführungsbeispiel für ein CSR-Paket dargestellt. Die CSR-Pakete stellen einen Spezialfall der Datenpakete dar und besitzen dementsprechend ebenfalls einen 3 Byte langen Header, Byte_0 bis Byte_2. Die CSR-Pakte können bereits am ersten bit erkannt werden, das auf logisch eins gesetzt ist. Das zweite bit t gibt an, ob es sich um einen Request oder eine Response handelt. Der Modifier mm gibt an, welche Transaktion gefordert oder beantwortet wird. Die Besonderheit besteht in den nächsten beiden Bytes:

Byte_3 8 bit Adresse (Höherwertiges Byte der 16 bit CSR-Adresse)
Byte_4 8 bit Adresse (Niederwertiges Byte der 16 bit CSR-Adresse)

Mit der 16 bit CSR-Adresse können 64 kByte adressiert werden. Diese 64 kByte stellen alle gerätespezifischen Eigenschaften sowie die Speicherstellen zum Lesen und Schreiben von Werten zur Verfügung. Diese Struktur ermöglicht eine schnelle Abfrage der Systemeigenschaften sowie eine einfach hierarchische Speicherung aller Informationen im Netz. Die Architektur und Speicherbelegung der implementierten CSR-Architektur wird später beschrieben. Dabei ist der für alle Geräte vorgeschriebene Adreßbereich auf 2 kByte beschränkt. Die anderen dargestellten Bytes enthalten Nutzdaten.

Der Medium Access Layer muß den fairen Zugriff der einzelnen Geräte, bei gleichzeitig optimiertem Durchsatz, zur Verfügung stellen. Da der Bus ohne zusätzliche Hardware für den Physical und Link Layer auskommen soll, muß der Zugriffsmechanismus stark vereinfacht werden. Dazu kann beispielsweise ein CSMA/CD-Mechanismus (Carrier Sense Multiple Access Collision Detection) eingesetzt werden.

Der physikalische Rahmen weist, wie oben beschrieben, zwei sogenannte GAPs (Signallücken) auf, die das Systemverhalten bestimmen, nämlich den Acknowledge GAP und den Arbitration GAP. Diese Signallücken steuern den Zugriff auf das Medium (Bus). Die einzelnen Geräte detektieren ankommende Pakete durch die fallende Flanke des Startbits nach einer festgelegten Zahl von logischen Einsen. Nach der Freigabe des Interrupts, entweder zum Empfang eines neuen Paketes oder zur Sendung, die nach etwa 20 Bittakten erfolgt, muß ein sendebereites Gerät noch eine zufällige Anzahl von Bittakten warten, bevor der Sendevorgang beginnt. Unmittelbar vor Sendung wird dann noch einmal kontrolliert, ob der Kanal noch frei ist.

Die zufällige Anzahl von zu wartenden Bittakten wird zur Vereinfachung des Systems nicht bei jedem Sendevorgang neu gewählt, da hierzu ein zusätzlicher Zufallszahlen-Generator nötig wäre. Vielmehr ist es vorgesehen, daß die NodeID, die, wie oben beschrieben, zufällig vergeben wird, direkt das zusätzliche Zeitintervall an. Damit beträgt die maximale Lücke zwischen zwei Pakteten

20 + 32 = 52 bit (für den Fall, daß maximal 32 Geräte zugelassen sind), woraus sich im Mittel eine Lücke von 20 + 16 = 36 bit ergibt.

Die Aufgabe des Device Control Layers ist die Vergabe der NodeID. Jedes Gerät ist durch eine 64 bit-GUID festgelegt, die wie folgt aufgebaut sein kann:

Byte 0-2:  3 Byte Vetriebs-ID (Vendor-ID)
0x00D0D5h = Vertriebs-ID der Anmelderin
Byte 3-7:  5 Byte Stations-ID (Device-ID)
0xAAAAXXXXXh = Vertriebs-ID der Anmelderin
AAAAh: Ungleich OxFFFEh und OxFFFFh
XXXXXXh: Beliebig

Bei der Vergabe der Stations-ID ist darauf zu achten, daß sie dem allgemeinen Schema bei der Vergabe von Geräteadressen des jeweiligen Herstellers entspricht. Die so für jedes Gerät eindeutige MAC-Adresse ist für die Nutzung auf dem Physical Layer des Busses nicht geeignet, da die Anzahl an adressierbaren Geräten und damit die Länge der Adresse viel zu groß ist. Innerhalb des Busses wird daher die Node-ID vergeben, die nur 6 bit lang ist, wie es oben im Zusammenhang mit den Paket-Headern beschrieben ist.

Zur Sicherstellung der Zufälligkeit des Arbitration GAP und zur weiteren Kollisionsreduktion wird die NodelD zufällig vergeben. Hierbei ist die Zufälligkeit nicht streng spezifiziert und muß daher nicht durch einen Zufallszahlengenerator erzeugt werden. Vielmehr reichen zufällige Registerinhalte oder einfach die unteren 6 bit der MAC-Adresse als Initialwert aus.

Bevor die so gewählte Node-ID benutzt werden kann, muß das Gerät für eine Zeitdauer von

$$N \cdot T_{AM}$$

mit N = 3 und $T_{AM}$ = ALIVE-Paket-Intervall, warten. Hierdurch ist sichergestellt, daß von allen Geräten ALIVE-Pakete empfangen wurden und damit alle bereits vergebenen Node-IDs bekannt sind. Ist die vom Gerät gewählte Node-ID bereits vorhanden, muß eine weitere, z. B. durch Addition der Primzahl 17 (Addition mod 32) versucht werden. Die ersten kollisionsfrei zu verwendende Node-ID wird gewählt und mit entsprechenden ALIVE-Paketen im Netz bekannt gemacht.

Mit diesem Mechanismus der Vergabe von Node-IDs das aufgabengemäße Ziel des Hot Plug & Play ohne großen Aufwand erreichbar. Ein Gerät meldet sich durch seine ALIVE-Pakete im Netz an und ist damit für alle Kommunikationspartner erreichbar. Aufgrund der CSR-Architektur, die unten noch beschrieben werden wird, wissen nun alle Geräte, wo welche Information zu finden ist. Wird ein Gerät vom Bus entfernt oder ausgeschaltet, werden keine weiteren ALIVE-Pakete mehr erkannt. Ein Gerät gilt als abgemeldet, wenn nach einer Zeitdauer von

$$M \cdot T_{AM}$$

mit M = 2,

Intervallen kein ALIVE-Paket mehr empfangen werden konnte. Nach einer Abmeldung muß sich ein Gerät, wie oben beschrieben, neu anmelden, jedoch sollte es versuchen, die letztgültige Node-ID wieder zu benutzen. Dies sorgt dafür, daß sehr kurzzeitige, evtl. unbeabsichtigte An-/Abmeldevorgänge nicht alle Geräte belasten, sondern für die nicht an der Kommunikation beteiligten Geräte unsichtbar sind. Um dies zu ermöglichen muß die jeweils verwendete NodeID in einem nichtflüchtigen Speicher des jeweiligen Geräts, der z. B. dem Geräteprozessor zugeordnet ist, gespeichert werden, nachdem sie beim erstmaligen Anmeldevorgang festgelegt und als gültig erkannt wurde. Generell können die Geräte aber, beim Abschalten oder Abmelden, vollständig ausgeschaltet werden, d. h. das Gerät kann vollständig von der Netzspannung getrennt werden. Dies ist möglich, weil bis zum erneuten Einschalten des Geräts dieses als nicht mehr im Netzwerk vorhanden gilt, da es nur über seine ALIVE-Pakte erkannt wird, und weil nach einem erneuten Einschalten das Gerät sich durch die Auswertung der ALIVE-Pakete der anderen aktiven Geräte über den aktuellen Zustand des Netzwerks kurzfristig informieren kann. Dies ist kurzfristig möglich, da die ALIVE-Pakete, wie oben beschrieben, ca. einmal pro Sekunde von jedem aktiven Gerät gesendet werden.

Der Netzwerkzustand kann von einzelnen Geräten, je nach ihrer Leistungsfähigkeit, regelmäßig überprüft oder nur bei beabsichtigten Transaktionen abgefragt werden.

Die oben beschriebene Vorgehensweise zur Vergabe von Node-IDs funktioniert innerhalb eines Busses. Bei Zusammenschluß von zwei Bussen (TV-Gerät und Videorecorder mit analogem und digitalem Satellitenreceiver) kann es passieren, daß doppelte Node-IDs auftauchen, obwohl die einzelnen NodeIDs korrekt vergeben wurden. Erscheint bei der Auswertung von Paketen irgendein Paket, das als Quell-Adresse die eigene NodeID enthält, ist diese Node-ID doppelt vergeben. In diesem Fall wird bei den eigenen ALIVE-Pakten der Modifier mm, wie oben beschrieben, auf INVALIDATE gesetzt und beide Geräte melden sich gemäß den beschriebenen Mechanismen neu am Netz an.

Die CSR-Architektur kann beispielsweise entsprechend der Norm IEEE 1212 mit dem Namen "Control and Status Registers (CSR) Architecture for Microcomputer Busses" festgelegt werden. Die CSR-Architektur definiert, wie Geräte, die an einen Bus oder ein Netzwerk angeschlossen sind, angesprochen werden können. Die CSR-Architektur geht davon aus, daß die Geräte Register besitzen, deren Inhalt über das Netzwerk mit einem Lese-Befehl ausgelesen und dessen Wert über einen Schreib-Befehl verändert werden kann. Die CSR-Architektur definiert einen allgemeinen 64 bit Adreßraum, und einen mindestens 2 kByte großen Register-Adreßraum. Dieser unterteilt sich in einen Cor-Registers Bereich (0 bis 511 Byte), einen Bus-Dependent-Register Bereich (512 bis 1023 Byte) und einen Read only Memory (ROM) Bereich (1024 bis 2048 Byte). Der CSR-Adreßraum ist virtuell und kann auf den Adreßraum der Mikrocontroller oder Prozessoren in den Geräten abgebildet werden. Jedoch ist eine beliebige Abbildung zulässig und oft auch sinnvoll, da meist nur wenige der möglichen Register implementiert werden.

Der lesende Zugriff auf die Register (und das ROM) erfolgt über die READ Transaktion. Mit den WRITE und LOCK Transaktionen können Registerinhalte modifiziert werden. Eine Transaktion besteht stets aus zwei Nachrichten, einem CSR-Request und einer CSR-Response.

Jedes Gerät am Netzwerk kann mittels der READ / WRITE / LOCK Transaktionen auf die Register jedes anderen Gerätes zugreifen. Dazu sendet der Anfragende einen CSR-Request an das Zielgerät. Die Request Nachricht enthält unter anderem die Registeradresse, die Anzahl zu lesender bzw. zu verändernder Bytes und bei schreibendem Request die Daten. Das Zielgerät antwortet mit einer zugehörigen CSR-Response, die den Erfolgsstatus der Transaktion, die transferierter Bytes und bei lesendem Request die Daten enthält.

Die Norm IEEE 1212 definiert Register grundsätzlich mit 32 bit Wortbreite. Davon unabhängig können Schreib- und Lesezugriffe eine beliebige Byteanzahl umfassen. Für das vorliegende Ausführungsbeispiel wird vorgesehen, auch Register mit 8 bit Wortbreite zuzulassen.

Ein hoher Grad an Fehlertoleranz kann dadurch erreicht werden, daß CSR-Request und -Response über den CRC und Acknowledge des Link Layer gesichert werden. Zusätzlich ist ein Transaction Timeout definiert, innerhalb dessen die Response gesendet sein muß. Andernfalls kann die Transaktion mit gleicher Transaktions-Kennung wiederholt werden. Beispielsweise wird ein Transaction Timeout von 500 ms vorgesehen, wobei dieser Wert über das sogenannte SPLIT_TIMEOUT Register angepaßt werden kann.

Die WRITE Transaktion besteht aus dem WRITE-Request und der zugehörigen WRITE-Response. Eine mögliche Ausführungsform des WRITE-Request ist in Figur 12 dargestellt. Auf die Adresse folgen zwei Bytes weniger als in Byte Byte_2 angegeben, da die in IIIIII angegebene Länge das Adressregister, Byte_3 und Byte_4, beinhaltet. Die Tranaktions-Kennung tt kann vom Sender beliebig gewählt werden und dient dazu, die Zuordnung zur Response zu ermöglichen.

Das Zielgerät muß an den Anfragenden eine Response mit gleicher Transaktions-Kennung tt senden. Das Response Code Feld rrrr im Byte Byte_3 signalisiert den Erfolg oder die Fehlerursache. Eine mögliche Ausführungsform des WRITE-Response ist in Figur 13 dargestellt. Das Response Code Feld rrrr kann z. B. folgende Bedeutung haben:

| rrrr | 0000 | Request erfolgreich abgearbeitet |
| | 0100 | Ressourcen-Konflikt, Reqeuest kann wiederholt werden |
| | 0101 | Hardware-Fehler, Daten nicht verfügbar |
| | 0110 | kein Zugriff (z. B. ROM-Register) |
| | 0111 | Zugriff auf nicht existierendes Register |

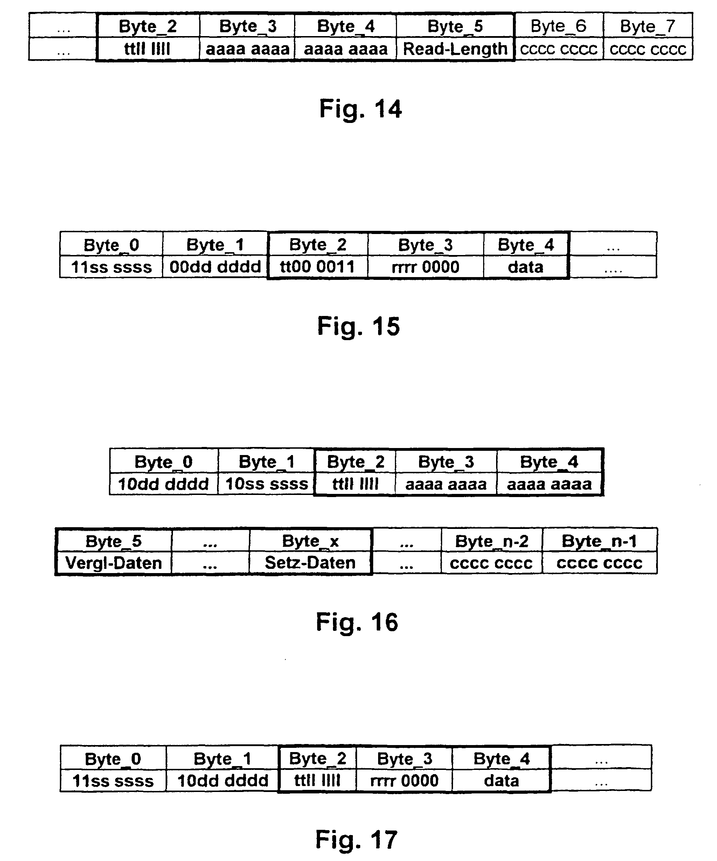

Die READ Transaktion besteht aus dem READ-Request und der zugehörigen READ-Response. Eine mögliche Ausführungsform des READ-Request ist in Figur 14 dargestellt. Die Transaktions-Kennung tt kann vom Sender beliebig gewählt werden und dient dazu, die Zuordnung zur Response zu ermöglichen. Die in Byte Byte_2 angegebene Länge IIIIII bezieht sich auf die Länge des Request Paketes. Die Anzahl zu lesender Bytes steht in Byte Byte_5. Bytes Byte_3 und Byte_4 enthalten das Adreßregister.

Eine mögliche Ausführungsform des READ-Response ist in Figur 15 dargestellt. Das Zielgerät muß an den Anfragenden eine Response mit gleicher Transaktions-Kennung tt senden. Das Response Code Feld rrrr im Byte Byte_3 signalisiert den Erfolg oder die Fehlerursache. Ab Byte Byte_4 folgen die Daten. Die Anzahl Bytes ist um eins niedriger als der in Byte Byte_2 angegebene Wert, da dieser das Response Code Feld, Byte_3, mit einbezieht. Die Anzahl in der Response Nachricht übertragener Bytes darf geringer als im Request angegeben sein, nie jedoch größer. Die Bedeutung des Response Codes rrrr entspricht der oben angegebenen Bedeutung des Respones Codes rrrr im Zusammenhang mit der WRITE Transaktion.

Die LOCK Transaktion stellt eine sogenannte READ / MODIFY / Write Transaktion dar, von der vielfältige Ausführungen möglich sind. Besondere Bedeutung hat die COMPARE / SWAP Transaktion, die zwei Eingangsoperanden, die Vergleichsdaten und die Setzdaten, sowie einen Ergebniswert aufweist. Sie vergleicht zuerst die im Request gesendeten Vergleichsdaten mit dem aktuellen Registerinhalt. Bei Gleichheit werden die Register mit den Setzdaten beschrieben, bei Ungleichheit bleiben die Registerinhalte unverändert. Rückgabewert ist in jedem Fall der alte Registerwert.

Der LOCK Befehl erlaubt mehreren Geräten, Resourcen eines einzelnen Gerätes eindeutig zu allokieren. Dies wird erreicht, indem zuerst der alte Registerwert mit einer READ Transaktion gelesen und anschließend beim Setzen des Registers mit der LOCK Transaktion auf den gewünschten neuen Wert der zuvor gelesene Wert als Vergleichswert verwendet wird. Die LOCK Transaktion wird nur dann erfolgreich sein, wenn der Registerinhalt zwischen READ und LOCK Befehl nicht von einem dritten Gerät modifiziert wurde.

Im Gegensatz zur IEEE 1212 welche die LOCK Transaktion auf 32 bit und 64 bit Register erlaubt, wird vorgesehen, die LOCK Transaktion für 8 bit und 32 bit Wortbreite zu definieren. Die LOCK Transaktion besteht aus dem LOCK-Request und der zugehörigen LOCK-Response. Eine mögliche Ausführungsform des LOCK-Request ist in Figur 16 dargestellt. Die Transaktions-Kennung tt kann vom Sender beliebig gewählt werden und dient dazu, die Zuordnung zur Response zu ermöglichen. Es ist zu beachten, daß die in Byte Byte_2 angegebene Länge lllllll die Adresse sowie die Anzahl Bytes für die Vergleichs- und die Setzdaten enthält. Beide müssen immer gleich lang sein.

Eine mögliche Ausführungsform des LOCK-Response ist in Figur 17 dargestellt. Das Zielgerät muß an das anfragende Gerät einer Response mit gleicher Transaktions-Kennung tt senden. Das Response Code Feld rrrr im Byte Byte_3 signalisiert den Erfolg oder die Fehlerursache, wie oben beschrieben. Ab Byte Byte_4 folgen soviele Byte Daten wie in der Längenangabe lllllll in Byte Byte_2 angegeben sind. Der Aufbau des LOCK-Request entspricht dem des WRITE-Request und der der LOCK-Response Pakets entspricht der der READ-Response.

Zur Verwaltung des Netzwerks, der Konfiguration der Geräte und der Ansteuerung der Funktionseinheiten finden die CSR-Register Verwendung. Der CSR-Adreßbereich ist dazu in mehrere Bereiche unterteilt:

| 0000h-01 FFh | CSR Core | Standard Register zur Buskontrolle |
| 0200h-03FFh | Bus | Busspezifische Register |
| 0400h-07FFh | CSR-ROM | CSR-Konfiguration |

(fortgesetzt)

| 0B00h-FFFFh | FCP | Funktionskontrolle |
|---|---|---|

Die beiden ersten Bereiche bis zur Adresse 03FFh dienen der Netzwerkverwaltung und werden nachfolgendem beschrieben. Ebenfalls nachfolgend beschrieben wird der Aufbau und die Möglichkeiten des CSR-ROM Bereichs. Um zu zeigen, wie Erweiterungen des Registerbereichs vorgenommen werden können, ist in der oben beispielhaft vorgenommenen Speicheraufteilung der Registerbereich für das Function Control Protocol (FCP) nach IEC 61883 erwähnt. Über FCP wird zum Beispiel das Protokoll AV/C-CTS (Audio Video / Control - Command and Transaction Set) abgewickelt, das Protokolle zur Ansteuerung aller gängigen Geräte der Unterhaltungselektronik beinhaltet.

Die CSR Core und die busspezifischen Register dienen im wesentlichen der Verwaltung des Netzwerkes. Im zugeteilten Adreßraum werden einige wenige Register vorgeschrieben:

| 0 | STATE_CLEAR | state and control information |
|---|---|---|
| 4 | STATE_SET | sets STATE_SET bits |
| 8 | NODE_IDS | required |
| 12 | RESET_START | required (command_reset) |
| 24 | SPLIT_TIMEOUT_HI | split requester timeout (seconds) |
| 28 | SPLIT_TIMEOUT_LO | as above (fraction of seconds) |
| 36 | ARGUMENT | diagnostic r/w test interface |
| 128-188 | MESSAGE_REQUEST | target address for messages |
| 192-252 | MESSAGE_REPONSE | as above |

Die beiden Register STATE_CLEAR und STATE_SET dienen sowohl als Statusanzeige als auch zur Steuerung des Betriebszustands des Netzwerkknotens. Sie definieren unter anderem:

STATE = Gerät ist Online (1) oder befindet sich noch in der Initialisierungsphase

    OFF = Gerät befindet sich im Standby

Das Register NODE_IDS dient im wesentlichen zur Verwaltung mehrerer - vernetzter Netzwerke und Busse, da es neben der Node-ID auch die Network-ID definiert. Das Register RESET_START erlaubt eine neue Initialisierung des Netzwerkknotens.

Unter Split Transactions versteht man Transaktionen, die aus zeitlich getrennten Request und Response Nachrichten bestehen, wie es für die oben beschriebenen Transaktionen stets der Fall ist. Dies hat für das Zielgerät den Vorteil, daß die zeitlichen Anforderungen an die Abarbeitung eines Requests der Verarbeitungsleistung des Gerätes angepaßt werden können. Mit den SPLIT_TIMEOUT Registern gibt das Gerät an, wie lange es maximal für die Abarbeitung eines Requests benötigt, ein anfragendes Gerät weiß daher, wie lange es auf die Response warten muß. Als zweite Funktion kann über die SPLIT_TIMEOUT Register das Time-Out von außen verändert werden, was jedoch stets eine Kooperation des Zielgerätes voraussetzt. Die Register ARGUMENT und MESSAGE sind optional, ihre Funktion ist nicht eindeutig vorab spezifiziert.

Für den vorgeschlagenen Bus ist es zweckmäßig, weitere Register zu definieren, beispielsweise Register, die eindeutig festlegen, welche Steckverbindung verwendet wird:

| PlugRegister | für Chinch-Steckverbindung |
|---|---|
| PlugRegister | für SCART-Steckverbindung |

Aufgabe des Configuration ROM ist die Beschreibung der Geräte bezüglich ihrer statischen Eigenschaften. Dazu gehören einerseits die Globally Unique ID (GUID), mit der jedes Gerät eindeutig identifiziert werden kann, und andererseits eine Beschreibung der Eigenschaften der Geräte. Beide Informationen zusammen ermöglichen erst das angestrebte Hot Plug & Play.

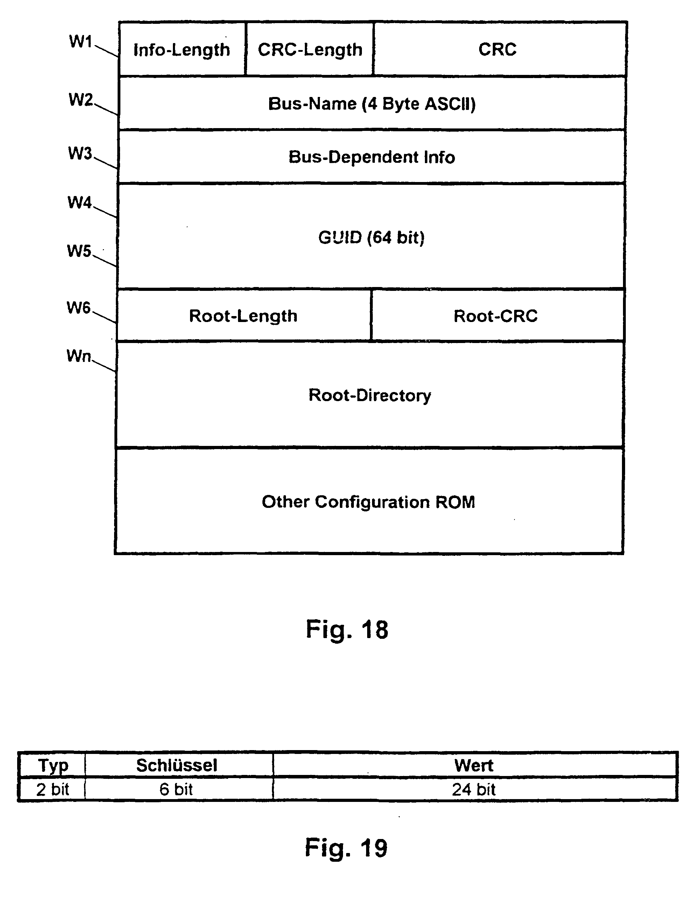

Das Configuration ROM besteht aus einer Anzahl von 32 bit-Einträgen, die auch Quadlets genannt werden. Der ROM Bereich ist in zwei Teilbereiche gegliedert, den Bus Info Block und das Root Diretory, wie beispielsweise in Figur 18 dargestellt. Das Root Directory enthält üblicherweise weitere Verzeichnisse mit systembeschreibender Information.

Das erste Wort W1 des Bus Info Block enthält folgende Parameter:

| Info-Length | Länge des Bus-Info-Blocks gemessen in Quadlets |
|---|---|

(fortgesetzt)

| CRC-Length | Anzahl der Quadlets; die-vom folgenden CRC geschützt sind |
|---|---|
| CRC | 16 bit CRC (wie oben beschrieben) |

Das zweite Wort W2 enthält den Namen des Bus-Standards, kodierd in ASCII-Zeichen, beispielsweise GRL1. Das dritte Wort W3 ist busspezifisch und kann nach Bedarf definiert werden. Es sollte zumindest ein max_rec Feld vorhanden sein, das die maximal zulässige Länge der Nachrichten bestimmt. Das max_rec Feld kann im zweiten Byte des Quadlets W3 enthalten sein. Das vierte und fünfte Wort W4 und W5 enthalten die Globally Unique ID, bestehend aus der 24 bit Herstellerkennung gefolgt von einer 40 bit Gerätenummer.

Der Aufbau des Root-Directory, wie der Aufbau aller weiteren Directories, kann erfolgen, wie in IEEE 1212 vorgeschlagen. Jedes Directory beginnt mit einem 32 bit Directory Header W6. Dieser besteht aus zwei 16 bit Einträgen, von denen ersterer (Root-Length) die Anzahl folgender Quadlets mit Directory Information angibt und zweiterer (Root-CRC) den CRC über das Directory beinhaltet.

Jeder Directory-Eintrag Wn ist 32 bit breit und teilt sich auf in zwei bit für Typ, sechs bit für Schlüssel und 24 bit für Wert, wie in Figur 20 dargestellt. Informationen, die nicht länger als 24 bit sind, werden direkt in die 24 bit des Feldes Wert abgelegt. Typ ist in diesem Fall auf 00 gesetzt. Längere Daten, wie zum Beispiel Texte, werden indirekt adressiert. In solchen Fällen enthält das Feld Wert einen Offset in Quadlets zu den eigentlichen Daten. Typ ist in diesem Fall auf 01 gesetzt. Die Typen LEAF, Typ gesetzt auf 10, und DIRECTORY, Typ gesetzt auf 11, erlauben durch das Bilden von Unterverzeichnissen eine strukturierte Ablage der Informationen. Bei LEAF enthält das Feld Wert einen Offset zu einem Leaf-Directory, bei DIRECTORY enthält das Feld Wert einen Offset zum einem Directory.

Während ein großer Teil der für das sechs bit lange Feld Schlüssel möglichen Codierungen fest vorgegeben ist (IEEE 1212), können acht Schlüssel vom frei definiert werden.

Die vorliegende Erfindung wurde bisher im Zusammenhang mit multimedialen Geräten beschrieben, insbesondere Geräten der Unterhaltungselektronik. Es ist jedoch offensichtlich, daß auch andere Geräte an dem beschriebenen Bus betrieben werden können, falls sie über einen geeigneten Mikrocontroller oder Prozessor verfügen, der zur oben beschriebenen Auswertung von Datenpaketen verwendet werden kann.

## Patentansprüche

1. Verfahren zur Steuerung und/oder zum Austausch von Daten für multimediale Geräte, insbesondere Geräte der Unterhaltungselektronik, bei dem die einzelnen Geräte mittels eines Busses verbunden sind, wobei

   - jedes aktivierte Gerät innerhalb einer vorgegebenen ersten Zeitdauer ($T_{AM}$) Nachrichten über den Bus an die anderen aktivierten Geräte sendet,
   - die anderen aktivierten Geräte anhand der Nachrichten erkennen können, ob das jeweilige Gerät aktiviert ist,
   - die anderen Geräte das jeweilige Gerät als nicht mehr aktiv erkennen können, wenn mindestens nach Ablauf einer zweiten vorgegebenen Zeitdauer ($M*T_{AM}$) keine Nachricht empfangen worden ist, und
   - ein Gerät, das erstmalig oder wiederholt aktiviert wird, erst nach einem Zeitraum, nach der erstmaligen oder wiederholten Aktivierung, der größer oder gleich einer vorgegebenen dritten Zeitdauer ($N*T_{AM}$) ist, eigene Nachrichten über den Bus an die anderen aktivierten Geräte sendet.

2. Verfahren nach Anspruch 1,
   **dadurch gekennzeichnet, daß**
   die erste Zeitauer ($T_{AM}$) kleiner als die zweite Zeitdauer ($M*T_{AM}$) und die dritte Zeitdauer ($N*T_{AM}$) ist und/oder die dritte Zeitdauer ($N*T_{AM}$) grösser als die zweite Zeitdauer ($M*T_{AM}$) ist.

3. Verfahren nach Anspruch 1 oder 2,
   **dadurch gekennzeichnet, daß**
   die Nachrichten jedes aktivierten Geräts einen Bestandteil aufweisen, der die Eigenschaften des Geräts beschreibt.

4. Verfahren nach einem der Ansprüch 1 bis 3,
   **dadurch gekennzeichnet, daß**
   jedes aktivierte Gerät eine eindeutige Identifizierung (NodeID) aufweist, und daß die eindeutige Identifizierung (NodeID) Bestandteil der Nachrichten des Geräts ist.

**5.** Verfahren nach Anspruch 4,
**dadurch gekenzeichnet, daß**
die eindeutige Identifizierung (NodeID) zufällig festgelegt wird.

**6.** Verfahren nach Anspruch 4,
**dadurch gekenzeichnet, daß**
die eindeutige Identifizierung (NodeID) aus einer übergeordneten eindeutigen Identifizierung (GUIDE) abgeleitet wird, wobei die übergeordnete eindeutige Identifizierung (GUIDE) mehr Informationen enthält als die eindeutige Identifizierung (NodeID).

**7.** Verfahren nach einem der Ansprüche 4 bis 6,
**dadurch gekenzeichnet, daß**
jedes Gerät, das erstmalig oder wiederholt aktiviert wird, erst nach einem Zeitraum, der größer oder gleich der dritten Zeitdauer (N\*T$_{AM}$) ist, seine eindeutige Identifizierung (NodeID) festlegt, wobei es während dieses Zeitraums die Nachrichten der anderen aktiven Geräte auswertet, um die darin enthaltenen eindeutigen Identifizierungen (NodeID) festzustellen, um seine eindeutige Identifizierung (NodeID) ungleich der festgestellten eindeutigen Identifizierungen (NodeID) der anderen aktiven Geräte festzulegen.

**8.** Verfahren nach einem der Ansprüche 1 bis 7,
**dadurch gekenzeichnet, daß**
aktive Geräte die Nachrichten der anderen aktiven Geräte laufend auswerten.

**9.** Verfahren nach einem der Ansprüche 1 bis 7,
**dadurch gekenzeichnet, daß**
aktive Geräte die Nachrichten der anderen aktiven Geräte nur auswerten, bevor sie diese steuern und/oder bevor sie mit diesen Daten austauschen.

**10.** System eingerichtet um multimediale Geräte, insbesondere Geräte der Unterhaltungselektronik, zu steuern und/oder um Daten zwischen solchen multimediale Geräten auszutauschen, wobei die einzelnen Geräte mittels eines Busses verbunden sind und wobei das System dermaßen eingerichtet ist, daß

- jedes Gerät eine Busschnittstelle und einen Prozessor aufweist, über die es innerhalb einer ersten vorgegebenen Zeitdauer (T$_{AM}$) Nachrichten über den Bus an die anderen Geräte sendet,
- die anderen Geräte die gesendeten Nachrichten mit ihren Busschnittstellen empfangen und mittels der Prozessoren auswerten,
- die Auswertung der Nachrichten ergibt, welche Geräte aktiviert sind,
- Geräte als nicht aktiv erkannt werden, wenn nach Ablauf einer zweiten Zeitdauer (M\*T$_{AM}$), die mindestens der vorgegebenen Zeitdauer (T$_{AM}$) entspricht, keine Nachricht von dem jeweiligen Gerät empfangen worden ist, und
- ein Gerät, das erstmalig oder wiederholt aktiviert wird, erst nach einer dritten Zeitdauer (N\*T$_{AM}$), die größer oder gleich der ersten vorgegebenen Zeitdauer (T$_{AM}$) ist, eigene Nachrichten mittels seiner Busschnittstelle über den Bus sendet.

**11.** System nach Anspruch 10,
**dadurch gekennzeichnet, daß**
die Nachrichten jedes aktivierten Geräts einen Bestandteil aufweisen, der die Eigenschaften des Geräts beschreibt, wobei die Eigenschaften in einem Speicher des jeweiligen Geräts gespeichert sind.

**12.** System nach Anspruch 10 oder 11,
**dadurch gekennzeichnet, daß**
jedes aktivierte Gerät eine eindeutige Identifizierung (NodeID) aufweist, und daß die eindeutige Identifizierung (NodeID) Bestandteil der Nachrichten des Geräts ist, wobei die eindeutige Identifizierung (NodeID) in einem Speicher des jeweiligen Geräts gespeichert ist.

**13.** System nach Anspruch 12,
**dadurch gekenzeichnet, daß**
die eindeutige Identifizierung (NodeID) mittels eines Zufallsgenerators festgelegt wird.

**14.** System nach Anspruch 12,
**dadurch gekenzeichnet, daß**
die eindeutige Identifizierung (NodeID) durch den Prozessor aus einer übergeordneten eindeutigen Identifizierung (GUIDE) abgeleitet wird, wobei die übergeordnete eindeutige Identifizierung (GUIDE) in einem Speicher des Geräts gespeichert ist und mehr Informationen enthält als die eindeutige Identifizierung (NodeID).

**15.** System nach einem der Ansprüche 12 bis 14,
**dadurch gekenzeichnet, daß**
jedes Gerät, das erstmalig oder wiederholt aktiviert wird, erst nach einem Zeitraum, der größer oder gleich der vorgegebenen Zeit ist, seine eindeutige Identifizierung (NodeID) mittels seines Prozessors festlegt, wobei während des Zeitraums die Nachrichten der anderen aktiven Geräte ausgewertet werden, um die darin enthaltenen eindeutigen Identifizierungen (NodeID) festzustellen, um die eindeutige Identifizierung (NodeID) ungleich der festgestellten eindeutigen Identifizierungen (NodeID) der anderen aktiven Geräte festzulegen.

**16.** System nach einem der Ansprüche 10 bis 15,
**dadurch gekenzeichnet, daß**
aktive Geräte die Nachrichten der anderen aktiven Geräte mittels ihrer Prozessoren laufend auswerten.

**17.** System nach einem der Ansprüche 10 bis 15,
**dadurch gekenzeichnet, daß**
aktive Geräte die Nachrichten der anderen aktiven Geräte mittels ihrer Prozessoren nur auswerten, bevor andere Geräte gesteuert werden und/oder bevor mit anderen Geräten Daten ausgetauscht werden.

**18.** Multimediales Gerät, insbesondere Geräten der Unterhaltungselektronik, eingerichtet um andere derartige multimedialen Geräten zu steuern und/oder um Daten mit anderen derartigen multimedialen Geräten auszutauschen, wobei das Gerät mit einer Busschnittstelle und einem Prozessor ausgestattet ist und dermaßen eingerichtet ist, daß

- das Gerät im aktivierten Zustand innerhalb einer vorgegebenen ersten Zeitdauer ($T_{AM}$) mittels des Prozessors Nachrichten über die Busschnittstelle sendet,
- das Gerät an der Busschnittstelle eingehende Nachrichten empfängt und mittels des Prozessors auswertet,
- die Auswertung der Nachrichten ergibt, ob andere Geräte aktiviert sind,
- Geräte als nicht aktiv erkannt werden, wenn nach Ablauf einer zweiten Zeitdauer ($M*T_{AM}$), der mindestens der vorgegebenen ersten Zeitdauer ($T_{AM}$) entspricht, keine Nachricht von den Geräten empfangen worden ist, und
- das Gerät beim erstmaligen oder wiederholten Aktiviert werden, erst nach einer dritten Zeitdauer ($M*T_{AM}$), die größer oder gleich der vorgegebenen ersten Zeitdauer ($T_{AM}$) ist, eingene Nachrichten mittels des Prozessors über die Busschnittstelle sendet.

**Claims**

**1.** Method of controlling and/or exchanging data for multimedia appliances, in particular entertainment electronics appliances, in which the individual appliances are connected by means of a bus, wherein

- every activated appliance sends messages via the bus to the other activated appliances within a specified first time period ($T_{AM}$),
- the other activated appliances can detect from the messages whether the respective appliance is activated,
- the other appliances can detect the respective appliance as no longer active if no message has been received at least after the expiry of a second specified time period ($M*T_{AM}$), and
- an appliance that is activated for the first time or repeatedly sends its own messages to the other activated appliances via the bus only after a time period after the first or repeated activation that is greater than or equal to a specified third time period ($N*T_{AM}$).

**2.** Method according to Claim 1, **characterized in that** the first time period ($T_{AM}$) is less than the second time period ($M*T_{AM}$) and the third time period ($N*T_{AM}$) and/or the third time period ($N*T_{AM}$) is greater than the second time period ($M*T_{AM}$).

**3.** Method according to Claim 1 or 2, **characterized in that** the messages of every activated appliance have a component that describes the characteristics of the appliance.

4. Method according to any one of Claims 1 to 3, **characterized in that** every activated appliance has an unambiguous identification (NodeID) and **in that** the unambiguous identification (NodeID) is a component of the messages of the appliance.

5. Method according to Claim 4, **characterized in that** the unambiguous identification (NodeID) is randomly stipulated.

6. Method according to Claim 4, **characterized in that** the unambiguous identification (NodeID) is derived from a higher-level unambiguous identification (GUIDE), wherein the higher-level unambiguous identification (GUIDE) contains more information items than the unambiguous identification (NodeID).

7. Method according to any one of Claims 4 to 6, **characterized in that** every appliance that is activated for the first time or repeatedly stipulates its unambiguous identification (NodeID) only after a time period that is greater than or equal to the third time period ($N^*T_{AM}$), wherein it evaluates the messages of the other active appliances during said time period in order to stipulate the unambiguous identifications (NodeIDs) contained therein in order to stipulate its unambiguous identification (NodeID) as different from the stipulated unambiguous identifications (NodeIDs) of the other active appliances.

8. Method according to any one of Claims 1 to 7, **characterized in that** active appliances continuously evaluate the messages of the other active appliances.

9. Method according to any one of Claims 1 to 7, **characterized in that** active appliances only evaluate the messages of the other active appliances before they control them and/or before they exchange data with them.

10. System designed to control multimedia appliances, in particular entertainment electronics appliances, and/or to exchange data between such multimedia appliances, wherein the individual appliances are connected by means of buses and wherein the system is designed in such a way that

   - every appliance has a bus interface and a processor via which it sends messages via the bus to the other appliances within a first specified time period ($T_{AM}$),
   - the other appliances receive the messages sent with their bus interfaces and evaluate them by means of the processors,
   - the evaluation of the messages reveals which appliances have been activated,
   - appliances are detected as inactive if no message has been received from the respective appliance after the expiry of a second time period ($M^*T_{AM}$) that corresponds at least to the specified time period ($T_{AM}$), and
   - an appliance that is activated for the first time or repeatedly sends its own messages via the bus by means of its bus interface only after a third time period ($N^*T_{AM}$) that is greater than or equal to the first specified time period ($T_{AM}$).

11. System according to Claim 10, **characterized in that** the messages of every activated appliance comprise a component that describes the characteristics of the appliance, wherein the characteristics are stored in a memory of the respective appliance.

12. System according to Claim 10 or 11, **characterized in that** every activated appliance has an unambiguous identification (NodeID) and **in that** the unambiguous identification (NodeID) is a component of the messages of the appliance, wherein the unambiguous identification (NodeID) is stored in a memory of the respective appliance.

13. System according to Claim 12, **characterized in that** the unambiguous identification (NodeID) is stipulated by means of a random generator.

14. System according to Claim 12, **characterized in that** the unambiguous identification (NodeID) is derived by the processor from a higher-level unambiguous identification (GUIDE), wherein the higher-level unambiguous identification (GUIDE) is stored in a memory of the appliance and contains more information items than the unambiguous identification (NodeID).

15. System according to any one of Claims 12 to 14, **characterized in that** every appliance that is activated for the first time or repeatedly stipulates its unambiguous identification (NodeID) by means of its processor only after a time period that is greater than or equal to the specified time, wherein the messages of the other active appliances are evaluated during the time period in order to determine the unambiguous identifications (NodeIDs) contained therein in order to stipulate the unambiguous identification (NodeID) as different from the stipulated unambiguous identifications (NodeIDs) of the other active appliances.

16. System according to any one of Claims 10 to 15, **characterized in that** active appliances continuously evaluate the messages of the other active appliances by means of their processors.

17. System according to any one of Claims 10 to 15, **characterized in that** active appliances only evaluate the messages of the other active appliances by means of their processors before other appliances are controlled and/or before data are exchanged with other appliances.

18. Multimedia appliance, in particular entertainment electronics appliances, designed to control other such multimedia appliances and/or to exchange data with other such multimedia appliances, wherein the appliance is equipped with a bus interface and a processor and is designed in such a way that

- in the activated state, the appliance sends messages via the bus interface by means of the processor within a specified first time period ($T_{AM}$),
- the appliance receives incoming messages at the bus interface and evaluates them by means of the processor,
- the evaluation of the messages reveals whether other appliances are activated,
- appliances are detected as inactive if no message has been received from the appliances after the expiry of a second time period ($M*T_{AM}$) that corresponds at least to the specified first time period ($T_{AM}$), and
- the appliance sends its own messages via the bus interface by means of the processor on being activated for the first time or repeatedly only after a third time period ($M*T_{AM}$) that is greater than or equal to the specified first time period ($T_{AM}$).

## Revendications

1. Procédé de commande et d'échange de données pour des appareils multimédia, notamment des appareils de l'électronique du spectacle, dans lequel les différents appareils sont reliés au moyen d'un bus, selon lequel

- chaque appareil activé émet, pendant un premier intervalle de temps prédéterminé ($T_{AM}$), des informations aux autres appareils activés, par l'intermédiaire du bus,
- les autres appareils activés peuvent identifier, sur la base des informations, si l'appareil respectif est activé,
- les autres appareils ne peuvent plus identifier l'appareil respectif comme étant actif lorsqu'au moins, après l'écoulement d'un second intervalle de temps prédéterminé ($M*T_{AM}$), aucune information n'a été reçue,
- un appareil qui est activé pour la première fois ou d'une manière répétée, envoie ses propres informations par l'intermédiaire du bus aux autres appareils activés uniquement au bout d'un intervalle de temps intervenant après la première activation ou une activation répétée, qui est supérieure ou égale à un troisième intervalle de temps prédéterminé ($N*T_{AM}$).

2. Procédé selon la revendication 1, **caractérisé en ce que** le premier intervalle de temps ($T_{AM}$) est inférieur au second intervalle de temps ($M*T_{AM}$) et au troisième intervalle de temps ($N*T_{AM}$) et/ou le troisième intervalle de temps ($N*T_{AM}$) est supérieur au second intervalle de temps ($M*T_{AM}$).

3. Procédé selon la revendication 1 ou 2, **caractérisé en ce que** les informations de chaque appareil activé possèdent une composante qui décrit les caractéristiques de l'appareil.

4. Procédé selon l'une des revendications 1 à 3, **caractérisé en ce que** chaque appareil activé possède une identification nette (NodeID) et que l'identification nette (NodeID) fait partie des informations de l'appareil.

5. Procédé selon la revendication 4, **caractérisé en ce que** l'identification nette (NodeID) est fixée de façon aléatoire.

6. Procédé selon la revendication 4, **caractérisé en ce que** l'identification nette (NodeID) est dérivée d'une identification nette de rang supérieur (GUIDE), l'identification nette de rang supérieur (GUIDE) contenant plus d'informations que l'identification nette (NodeID).

7. Procédé selon la revendication 4 à 6, **caractérisé en ce que** chaque appareil, qui est activé pour la première fois ou de façon répétée, fixe son identification nette (NodeID), uniquement au bout d'un intervalle de temps qui est supérieur ou égal au troisième intervalle de temps ($N*T_{AM}$), auquel cas pendant cet intervalle de temps, les informations des autres appareils actifs sont évaluées pour la détermination des identifications nettes (NodeID) contenues dans ces appareils, de manière à fixer son identification nette (NodeID) différente des identifications nettes fixées (NodeID) des autres appareils actifs.

8. Procédé selon l'une des revendications 1 à 7, **caractérisé en ce que** les appareils actifs évaluent en permanence les informations des autres appareils actifs.

9. Procédé selon l'une des revendications 1 à 7, **caractérisé en ce que** des appareils actifs évaluent les informations des autres appareils actifs uniquement avant qu'ils commandent ces derniers et/ou avant qu'ils échangent des données avec ces derniers.

10. Système agencé pour commander des appareils multimédia, notamment des appareils de l'électronique du spectacle, et/ou échanger des données entre de tels appareils multimédia, selon lequel les différents appareils sont reliés à l'aide d'un bus, et selon lequel le système est agencé de telle sorte que

   - chaque appareil comporte une interface de bus et un processeur, au moyen desquels il émet des informations aux autres appareils par l'intermédiaire du bus pendant un premier intervalle de temps prédéterminé ($T_{AM}$),
   - les autres appareils reçoivent les informations émises avec leurs interfaces de bus et les évaluent au moyen des processeurs,
   - l'évaluation des informations indique quels appareils sont activés,
   - des appareils sont identifiés comme non actifs lorsqu'après l'écoulement du second intervalle de temps ($M*T_{AM}$), qui correspond au moins à l'intervalle de temps prédéterminé ($T_{AM}$), aucune information n'a été reçue de la part de l'appareil respectif, et
   - un appareil, qui est activé pour la première fois ou de façon répétée, envoie ses propres informations au moyen d'une interface de bus par l'intermédiaire du bus uniquement au bout d'un troisième intervalle de temps ($N*T_{AM}$) qui est supérieur ou égal au premier intervalle de temps prédéterminé ($T_{AM}$).

11. Système selon la revendication 10, **caractérisé en ce que** les informations de chaque appareil activé comportent une partie qui décrit les caractéristiques de l'appareils, les caractéristiques étant mémorisées dans une mémoire de l'appareil respectif.

12. Système selon la revendication 10 ou 11, **caractérisé en ce que** chaque appareil activé possède une identification nette (NodeID) et que l'identification nette (NodeID) fait partie des informations de l'appareil, l'identification nette (NodeID) étant mémorisée dans une mémoire de l'appareil respectif.

13. Système selon la revendication 12, **caractérisé en ce que** l'identification nette (NodeID) est fixée à l'aide d'un générateur de nombres aléatoires.

14. Système selon la revendication 12, **caractérisé en ce que** l'identification nette (NodeID) est obtenue par le processeur à partir d'une identification nette de rang supérieur (GUIDE), l'identification nette de rang supérieur (GUIDE) étant mémorisée dans une mémoire de l'appareil et contenant plus d'informations que l'identification nette (NodeID).

15. Système selon l'une des revendications 12 à 14, **caractérisé en ce que** chaque appareil, qui est activé pour la première fois de façon répétée, fixe son identification nette (NodeID) au moyen de son processeur uniquement au bout d'un intervalle de temps qui est supérieur ou égal à l'intervalle de temps prédéterminé, auquel cas pendant l'intervalle de temps, les informations des autres appareils actifs sont évaluées pour déterminer les identifications nettes (NodeID) qui s'y trouvent contenues, afin de fixer l'identification nette (NodeID) différente des identifications nettes fixées (NodeID) des autres appareils actifs.

16. Système selon l'une des revendications 10 à 15, **caractérisé en ce que** les appareils actifs évaluent en permanence les informations des appareils actifs à l'aide de leurs processeurs.

17. Système selon l'une des revendications 10 à 15, **caractérisé en ce que** les appareils actifs évaluent les informations des autres appareils actifs à l'aide de leurs processeurs avant que d'autres appareils soient commandés et/ou avant que des données soient échangées avec d'autres appareils.

18. Appareil multimédia, notamment appareil de l'électronique du spectacle, conçu pour commander d'autres appareils multimédia de ce type et/ou échanger des données avec d'autres appareils multimédia de ce type, dans lequel l'appareil est équipé d'une interface de bus et d'un processeur et est agencé de telle sorte que

- à l'état activé, l'appareil émet des informations par l'intermédiaire de l'interface de bus pendant un premier intervalle de temps prédéterminé ($T_{AM}$) à l'aide du processeur,
- l'appareil reçoit des informations arrivant au niveau de l'interface de bus et les évalue au moyen du processeur,
- l'évaluation des informations indique si d'autres appareils sont activés,
- des appareils sont identifiés comme non actifs lorsqu'au bout de l'écoulement d'un second intervalle de temps ($M*T_{AM}$), qui correspond au moins au premier intervalle de temps prédéterminé ($T_{AM}$), aucune information n'a été reçue de la part des appareils, et
- lors de sa première activation ou lors d'une activation répétée, l'appareil émet ses propres informations au moyen du processeur par l'intermédiaire de l'interface de bus uniquement au bout d'un troisième intervalle de temps ($M*T_{AM}$), qui est supérieur ou égal au premier intervalle de temps prédéterminé ($T_{AM}$).

| Applikation Layer |  |
|---|---|
| Presentation Layer |  |
| DLC | Link Layer |
| MAC |  |
| Physikal Layer |  |

## Fig. 1

C    VCR    DVD    TV    Sat    OA

## Fig. 2

EP 1 240 717 B1

**Fig. 3**

**Fig. 4**

21

**Fig. 5**

| ST | D0 | D1 | D2 | D3 | D4 | D5 | D6 | D7 | SP |
|----|----|----|----|----|----|----|----|----|----|

**Fig. 6**

| Byte_0 | Byte_1 |
|---------|---------|
| ttdd dddd | mmss ssss |

## Fig. 7

| Byte_0 | Byte_1 | Byte_n-2 | Byte_n-1 |
|---------|---------|-----------|-----------|
| ttdd dddd | mmss ssss | cccc cccc | cccc cccc |

## Fig. 8

±0 bit: ST 0 0 0 0 1 1 1 1 SP

-1 bit: ST 0 0 0 0 1 1 1 1 SP

+1 bit: ST 0 0 0 0 1 1 1 1 SP

Result: ST 0 0 0 0 0 0 1 1 SP

## Fig. 9

| Byte_0 | Byte_1 | Byte_2 | Byte_3 | ... | Byte_n-2 | Byte_n-1 |
|--------|--------|--------|--------|-----|----------|----------|
| 00dd dddd | mmss ssss | ssll llll | xxxx xxxx | ... | cccc cccc | cccc cccc |

## Fig. 10

| Byte_0 | Byte_1 | Byte_2 | Byte_3 | Byte_4 | Byte_n-2 | Byte_n-1 |
|--------|--------|--------|--------|--------|----------|----------|
| 1tdd dddd | mmss ssss | ssll llll | hhhh hhhh | llll llll | cccc cccc | cccc cccc |

## Fig. 11

| Byte_0 | Byte_1 | Byte_2 | Byte_3 | Byte_4 | ... |
|--------|--------|--------|--------|--------|-----|
| 10dd dddd | 01ss ssss | ttll llll | aaaa aaaa | aaaa aaaa | ... |

## Fig. 12

| Byte_0 | Byte_1 | Byte_2 | Byte_3 | Byte_4 | Byte_5 |
|--------|--------|--------|--------|--------|--------|
| 11ss ssss | 01dd dddd | tt00 0001 | rrrr 0000 | cccc cccc | cccc cccc |

## Fig. 13

| ... | Byte_2 | Byte_3 | Byte_4 | Byte_5 | Byte_6 | Byte_7 |
|-----|--------|--------|--------|--------|--------|--------|
| ... | ttll llll | aaaa aaaa | aaaa aaaa | Read-Length | cccc cccc | cccc cccc |

## Fig. 14

| Byte_0 | Byte_1 | Byte_2 | Byte_3 | Byte_4 | ... |
|--------|--------|--------|--------|--------|-----|
| 11ss ssss | 00dd dddd | tt00 0011 | rrrr 0000 | data | .... |

## Fig. 15

| Byte_0 | Byte_1 | Byte_2 | Byte_3 | Byte_4 |
|--------|--------|--------|--------|--------|
| 10dd dddd | 10ss ssss | ttll llll | aaaa aaaa | aaaa aaaa |

| Byte_5 | ... | Byte_x | ... | Byte_n-2 | Byte_n-1 |
|--------|-----|--------|-----|----------|----------|
| Vergl-Daten | ... | Setz-Daten | ... | cccc cccc | cccc cccc |

## Fig. 16

| Byte_0 | Byte_1 | Byte_2 | Byte_3 | Byte_4 | ... |
|--------|--------|--------|--------|--------|-----|
| 11ss ssss | 10dd dddd | ttll llll | rrrr 0000 | data | ... |

## Fig. 17

25

| W1 | Info-Length | CRC-Length | CRC |
|---|---|---|---|
| W2 | Bus-Name (4 Byte ASCII) | | |
| W3 | Bus-Dependent Info | | |
| W4 | GUID (64 bit) | | |
| W5 | | | |
| W6 | Root-Length | | Root-CRC |
| Wn | Root-Directory | | |
| | Other Configuration ROM | | |

**Fig. 18**

| Typ | Schlüssel | Wert |
|---|---|---|
| 2 bit | 6 bit | 24 bit |

**Fig. 19**